# EUROPEAN PATENT APPLICATION

(11) **EP 1 808 728 A1**
(43) Date of publication of application: **18.07.2007**
(21) Application number: 06126562.5
(22) Date of filing: 19.12.2006
(51) Int. Cl.: G02F 1/19

(54) **Image display apparatus**

(30) Priority: 11.01.2006 KR 20060003244
(71) Applicant: Samsung Electronics Co., Ltd., Suwon-si, Gyeonggi-Do (KR)
(72) Inventor: Lee, Hong-seok, Gyunggi-do 449-712 (KR); Lee, Su-mi, Gyunggi-do 449-712 (KR)
(74) Representative: Ertl, Nicholas Justin

(57) **Abstract**

An image display apparatus (1000) is provided to improve display characteristics, the apparatus including a prism (300) and a pixel section (400) on one side of the prism (300). The pixel section (400) includes a reflective electrode (410) and dielectrics (420) disposed at a predetermined distance from the reflective electrode (410). The dielectrics (420) are in contact with the reflective electrode (410) if voltage is applied, and the effective refractive index changes according to the image signal. The effective refractive index of the section of the reflective electrode (410) in contact with the dielectrics (420) changes, and accordingly, the reflectivity of the reflective electrode (410) changes corresponding to the image signal. The pixel section (400) is able to regulate the surface plasmon resonance by regulating the reflective electrode (410), and is able to display the black state using the surface plasmon resonance. The image display apparatus (1000) provides improved contrast ratio by preventing color leaks from arising in the black state, and thus, improve display characteristics.

## Description

### BACKGROUND OF THE INVENTION

Apparatuses consistent with the present invention relate to an image display apparatus, and more specifically, to an image display apparatus in which the contrast ratio can be improved.

Optical projectors are image display apparatuses which display small images onto a large screen using optical methods. Optical projectors can be divided into cathode ray tube (CRT) projection, liquid crystal display (LCD) projection and digital light processing (DLP) projection forms according to the type of device carrying the image.

The oldest method is the CRT projection method, in which the screen image is formed by projecting a beam of electrons through a cathode ray tube and traced onto the inside surface of the screen.

In the LCD projection method, an external reproduction image signal is transmitted to a projection television system and the image is reproduced on a small LCD within the projection television system. When a beam of light is transmitted to the LCD from the rear of the LCD, the image reproduced on the LCD is magnified by a lens, and the magnified image is reflected in a mirror and projected on the screen. By this means, the image is displayed on the screen and can be seen by the user.

The DLP projection method magnifies and receives an image using digital micromirror device (DMD) chips in which hundreds of thousands of tiny mirrors are integrated. DLP projection comprises DMD chips formed as reflective microelectromechanical system (MEMS) elements, and a plurality of micromirrors are disposed on the surface of the DMD chips. The number of micromirrors formed is equal to the number of pixels on the screen, and each micromirror is disposed at a predetermined distance from surrounding micromirrors.

When the light beam reaches the micromirrors, a diffused reflection arises on the edge of the micromirror, or diffraction occurs in the space between the micromirrors and the image quality deteriorates.

Moreover, because the process involved in such micromirrors is complex and each micromirror must be finely adjusted, the manufacturing costs increase and production decreases.

### SUMMARY OF THE INVENTION

According to a first aspect of the invention, there is provided an image display apparatus as claimed in claim 1. According to a second aspect of the invention, there is provided an image display apparatus as claimed in claim 18.

The invention provides an image display apparatus in which the contrast ratio can be improved and the display quality enhanced.

The image display apparatus designed as an exemplary embodiment of one of the characteristics of the present invention comprises a light supplier, a prism, a pixel section, and a voltage source module.

The light supplier emits a beam of light, and the prism bends the light beam emitted by the light supplier and transmits the light. In one example, the pixel section comprises a reflective electrode disposed on one side of the prism, which reflects light emitted by the prism; and a plurality of dielectrics disposed at a predetermined distance from the one or more reflective electrode, which regulate the light reflectivity of the reflective electrode by varying in effective refractive index according to the voltage applied. The voltage module is electrically connected to the dielectrics, and regulates the effective refractive index of the dielectric by regulating the voltage provided to the dielectric according to the image signal.

The reflective electrode is preferably divided into a plurality of pixel areas, and the pixel section comprises a plurality of dielectrics. Each pixel area is disposed separately, so that the plurality of dielectrics regulates the reflectivity of the reflective electrode separately for each pixel area.

The pixel section may define the plurality of pixel areas by being disposed above the reflective electrode, and may further comprise an isolation part in the space between the dielectrics and the reflective electrode.

Here, the area at the edge of the dielectric is disposed on the isolation part, and the dielectric is in contact with the reflective electrode if voltage is applied, and is separated from the reflective electrode if the voltage supply is cut off.

Furthermore, the pixel section may be disposed on one side of the dielectric, and the pixel section may further comprise a voltage regulator, to regulate the dielectric constant of the dielectric according to the voltage supply from the power source module in order to regulate the reflectivity of the beam of light transmitted from the prism according to the gradation value of the image signal.

In the present exemplary embodiment, the voltage regulator is formed as an electrooptical member, in which the refractive index varies according to the voltage applied, and the power source module controls the voltage which is applied to the voltage regulator by being electrically connected to the voltage regulator.

The light supplier may emit a red light beam, a green light beam or a blue light beam, and the incident angle at which the red, green and blue light beams enter the prism may differ.

The prism preferably faces the light supplier, and comprises an incident surface which receives light emitted from the light supplier; a reflective surface disposed above the reflective electrode, which provides light received from the incident surface to the reflective electrode, and receives light reflected by the reflective electrode; and an exit surface, which transmits light received from the reflective surface.

The image display apparatus may further comprise a polarizer, interposed between the incident surface and the light supplier, which polarizes the beam of light emitted by the light supplier.

The image display apparatus may additionally comprise a lens, which may face the exit surface, and which combines and emits the light beam received from the exit surface of the prism.

The reflective electrode may be formed of metal film.

An exemplary embodiment of another aspect of the present invention comprises a light supplier, a prism, a pixel section and a power source module.

The light supplier emits red, green and blue light beams, and the prism bends the path of the beams of light received from the light supplier and emits the deflected beams of light. The pixel section comprises a reflective array formed as a matrix on one side of the prism, which reflects light received from the prism; and an electrooptical member, disposed on one surface of the reflective array, and which regulates the reflectivity of the reflective array by varying in refractive index according to the voltage applied. The power source module is electrically connected to the electrooptical member, and regulates the voltage provided to the electrooptical member so that the refractive index of the electrooptical member can also be regulated corresponding to the image signal.

The reflective array may comprise a plurality of reflective electrodes disposed at predetermined intervals, and the electrooptical member is disposed facing each reflective electrode.

An image display apparatus embodying a further aspect of the present invention comprises a light supplier, which emits a beam of light, an optical waveguide panel, a display, a light controller, and a scanner.

The optical waveguide panel guides the beam of light received from the light supplier. The display is divided into a plurality of pixel areas which form a matrix, and displays the image using the beam of light received from the optical waveguide panel. The light controller is formed on one surface of the optical waveguide panel, and regulates the light inside the optical waveguide panel line by line, in order that the light received from the optical waveguide panel is regulated on the plurality of pixel areas line by line. The scanner receives the light from the optical waveguide panel, and scans the plurality of pixel areas on the display line by line.

The light controller may comprise a reflective electrode formed on one side of the optical waveguide panel, which reflects the light inside the optical waveguide panel; and one or more dielectrics, which are disposed at a predetermined distance from the reflective electrode, and are formed facing the rows of the plurality of pixel areas. The effective refractive index of the dielectrics varies according to the voltage received in order to regulate the light provided to each pixel area of the relevant row by regulating the light reflectivity of the reflective electrode.

The light controller may further comprise an electrooptical member disposed on one side of the dielectric, and which regulates the dielectric constant of the dielectric according to the voltage applied, in order to regulate the reflectivity of the electrode corresponding to the gradation value of the pixel corresponding to the dielectric.

The light controller may additionally comprise a plurality of dielectrics, and the reflectivity of the electrode is regulated for the area corresponding to each dielectric.

The light controller may further comprise one or more reflective electrodes disposed on one side of the optical waveguide panel, which reflect the beam of light inside the optical waveguide panel; and an electrooptical member disposed on one side of the reflective electrodes facing the reflective electrodes. The refractive index of the electrooptical member varies according to the voltage applied, in order to regulate the reflectivity of the reflective electrodes.

The light controller comprises a plurality of reflective electrodes, and each reflective electrode corresponds to one row among the plurality of pixel areas.

The image display apparatus may further comprise one or more diffraction grids disposed on one side of the optical waveguide panel, which guide the beam of light from the light supplier so that it may be provided to the optical waveguide panel.

The light supplier emits red, green and blue beams of light. The diffraction grids correspond in number with the colors emitted by the light supplier, and are disposed at predetermined intervals.

According to the kind of image display apparatus presented here, light can be completely cut off in the black state, so the contrast ratio can be improved, and the display characteristics of the image display apparatus can be improved.

### BRIEF DESCRIPTION OF THE DRAWINGS

The aspects of the present invention will be made clearer by explaining in detail the exemplary embodiments, making reference to the attached drawings. The attached drawings are as follows:
FIG. 1 is a plane view illustrating an image display apparatus in an exemplary embodiment of the present invention,
FIG. 2 is a perspective view illustrating the prism and pixel section displayed in FIG. 1,
FIG. 3 is an expanded sectional view illustrating the pixel section displayed in FIG. 1,
FIG. 4 is a plane view illustrating the rear of the pixel section displayed in FIG. 1,
FIG. 5 is a graph illustrating the reflectivity of the incident light according to the thickness of the metal film,
FIG. 6 is a graph illustrating the reflectivity of the incident light according to the dielectric effective refractive index,
FIG. 7 is a sectional view illustrating a different exemplary embodiment of the pixel section displayed in FIG. 1,
FIG. 8 is a plane view illustrating an image display apparatus according to another exemplary embodiment of the present invention,
FIG. 9 is a plane view of the rear of the pixel section shown in FIG. 8,
FIG. 10 is a plane view illustrating an image display apparatus according to yet another exemplary embodiment of the present invention,
FIG. 11 is a sectional view cut along line I-I' in FIG. 10,
FIG. 12 is a perspective view illustrating the image display apparatus shown in FIG. 10, and
FIG. 13 is a sectional view illustrating a different exemplary embodiment of the light controller in FIG. 11.

### DESCRIPTION OF THE EXEMPLARY EMBODIMENTS

The present invention is described in more detail below, referring to the attached drawings.

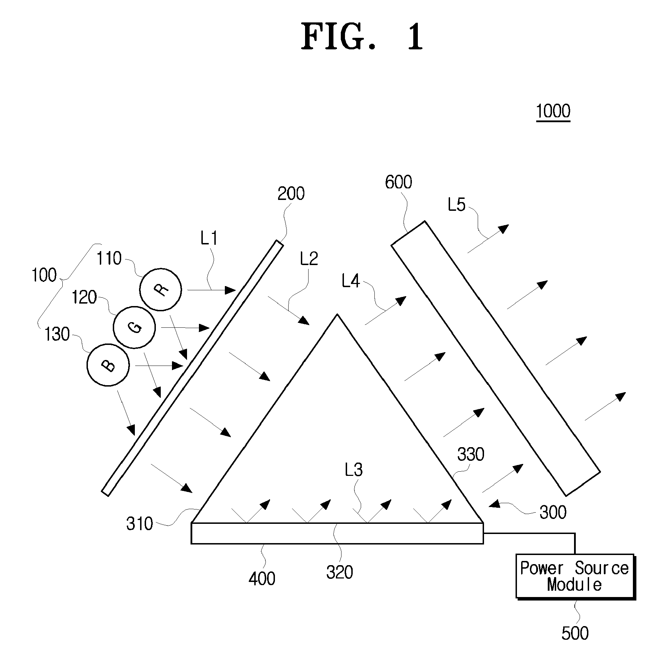

FIG. 1 is a plane view of an image display apparatus according to an exemplary embodiment of the present invention.

Referring to FIG. 1, the image display apparatus 1000 according to the present invention comprises a light supplier 100, a polarizer 200, a prism 300, a pixel section 400, a power source module 500, and a lens 600.

The light supplier 100 receives power from an external source, and emits a beam of light. The light supplier 100 is composed of first, second and third light sources 110, 120 and 130.

The light supplier 100 in the present exemplary embodiment comprises three light sources 110, 120 and 130, but the number of light sources can be increased or reduced according to the size of the prism 300.

The light sources 110, 120 and 130 emit different colored beams of light. In the present exemplary embodiment, the first light source 110 emits a red beam of light, the second light source 120 emits a green beam of light, and the third light source 130 emits a blue beam of light.

Here, the first, second and third light sources 110, 120 and 130 alternately emit beams of light of their respective colors. Consequently, only one of the first, second and third light sources 110, 120 and 130 is activated at any one time, and the remaining two light sources are switched off. When the light source which is on is switched off, another light source is simultaneously activated. Because each light source 110, 120 and 130 is only on or off for a very short interval of time, the user is unable to detect the alternation between them. Each light source 110, 120 and 130 of the light supplier 100 can be switched on and off in a preset order, so, for example, the first light source 110 may be switched on, then the second light source 120 and finally, the third light source 130.

The polarizer 200 polarizes the beam of light L1 emitted by the light supplier 100, and the polarized light beam L2 enters the prism 300. Generally, the light has a polarization component comprising S-polarization and P-polarization. The polarizer 200 provides a beam of light L1 emitted by the light supplier 100 to the prism 300 by passing the light beam through only components that are parallel to the polarizing axis of the polarizer 200.

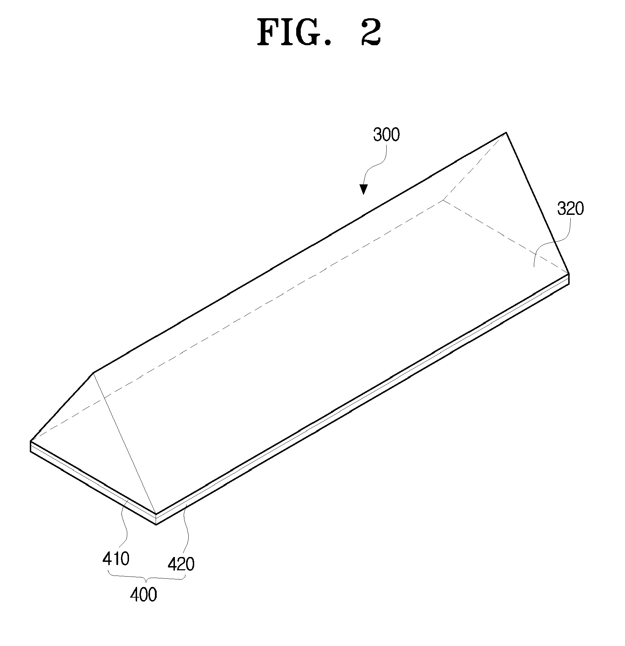

FIG. 2 is a perspective view illustrating the prism 300 and pixel section 400 shown in FIG. 1.

The prism 300 as shown in FIGS. 1 and 2 is triangular, and guides the polarized light beam L2 emitted by the polarizer 200.

The prism 300 comprises an incident surface 310 facing the polarizer 200; a reflective surface 320, which reflects the beam of light that enters the prism through the incident surface 310; and an exit surface 330, which receives light from the reflective surface 320 and transmits the light to the lens 600. The incident surface 310, reflective surface 320 and exit surface 330 define the triangular shape of the prism 300, the incident surface 310 and exit surface 330 forming the peak of the prism 300.

The incident surface 310 is disposed at a predetermined distance from the polarizer 200, and receives polarized light L2 from the polarizer 200.

The reflective surface 320 is adjacent to the incident surface 310, and the pixel section 400 disposed at the rear of the reflective surface 320 reflects the light L2 received from the incident surface 310. To be precise, the reflective surface 320 receives light from the incident surface 310 and provides the light to the pixel section 400, and then provides the reflected light L3 regulated by the pixel section 400 to the exit surface 330.

The exit surface 330 is adjacent to the incident surface 310 and the reflective surface 320, and emits light L3 that has been regulated by the pixel section 400 and received from the reflective area 320. The exit surface 330 emits light regulated by the prism 300 and the pixel section 400 to the lens 600.

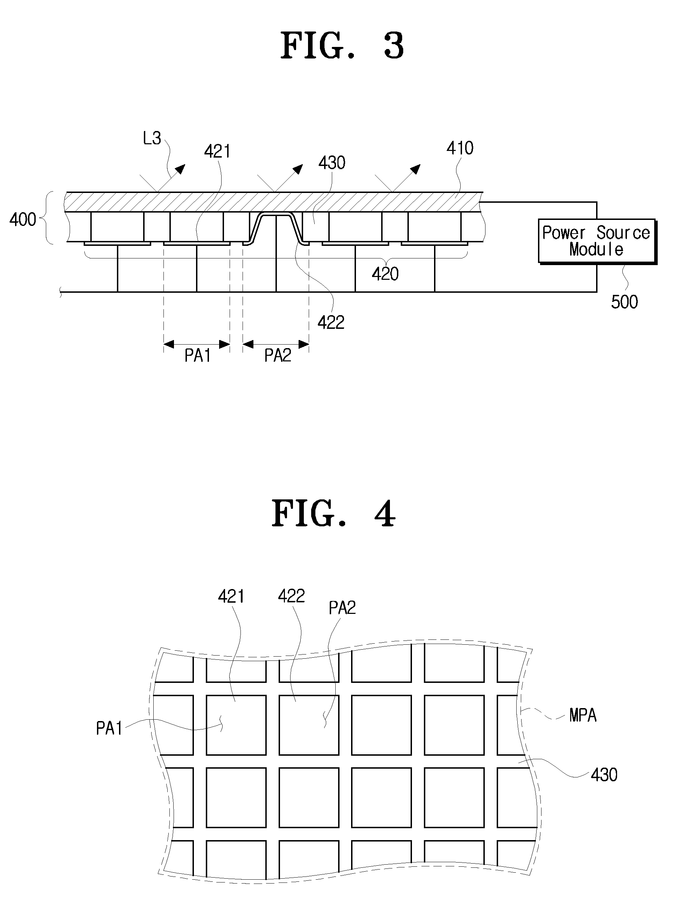

FIG. 3 is an expanded sectional view illustrating the pixel area shown in FIG. 1, and FIG. 4 is a plane view illustrating the rear of the pixel area shown in FIG. 1.

The pixel section 400, as shown in FIGS. 2 and 3, is disposed under the reflective surface 320, and regulates the reflectivity of the light received from the incident surface 310.

The pixel section 400 comprises reflective electrode 410 disposed on the reflective surface 320, a plurality of dielectrics 420 disposed at predetermined intervals from the reflective electrode 410, and an isolation part 430 interposed between the reflective electrode 410 and the plurality of dielectrics 420.

The reflective electrode 410 is composed of metal, is formed as a thin film on the reflective surface 320, and reflects light L2 that enters through the incident surface 310, in FIG. 1. The reflective electrode 410 comprises a plurality of pixel areas, or multiple pixel areas ("MPA"), and the reflectivity of each pixel area is set individually by the plurality of dielectrics 420. Accordingly, the reflectivity of the light L3 emitted by the reflective electrode 410 is different for each pixel area.

The plurality of dielectrics 420 are placed facing the reflective electrode 410, and are formed opposing the plurality of pixel areas MPA.

Referring to FIGS. 3 and 4, the plurality of dielectrics 420 are formed in a matrix, and are formed separately for each pixel area. The plurality of dielectrics 420 regulate the effective refractive index of the reflective electrode 410 separately for each of the plurality of pixel areas MPA. The edges of each of the plurality of dielectrics 420 are connected to the isolation part 430.

The isolation part 430 defines each pixel area, and separates the reflective electrode 410 and the plurality of dielectrics 420 at a predetermined distance.

The power source module 500 is electrically connected to the reflective electrode 410 and the plurality of dielectrics 420, and provides voltage to the reflective electrode 410 and the plurality of dielectrics 420. The power source module 500 switches the voltage provided to the plurality of dielectrics 420 on or off according to the image signal received. To be exact, the power source module 500 is connected individually to each of the plurality of dielectrics 420, and switches the voltage provided to each of the plurality of dielectrics 420 on or off separately. As a result of this, the power source module 500 can regulate the voltage provided to each of the plurality of dielectrics 420 corresponding to each pixel area individually.

The form and function of each of the plurality of dielectrics 420 in this exemplary embodiment of the present invention is substantially the same, and the connection between the plurality of dielectrics 420, the reflective electrode 410 and the power source module 500 is also substantially the same. Therefore, below, the relationship between the reflective electrode 410, the plurality of dielectrics 420, and the power source module 500 is explained in detail, using the first dielectric 421 and the second dielectric 422 as examples. The first and second dielectrics 421 and 422 represent only two of the many dielectrics which may be present.

The first dielectric 421 is disposed on the first pixel area PA1 among the plurality of pixel areas, and the second dielectric 422 is disposed on the second pixel area PA2, adjacent to the first pixel area PA1. The first and second dielectrics 421 and 422 are separate from each other, and are substantially the same size.

If the power source module 500 applies voltage to the reflective electrode 410, the first dielectric 421 and the second dielectric 422, contact is established between each of the first and second dielectrics 421 and 422 and the reflective electrode 410, and the effective refractive index of the first and second dielectrics 421 and 422 varies according to the voltage applied. Although not shown in the drawings for the sake of simplicity, one skilled in the art would readily appreciate the use of multiple conductors, a switching mechanism, etc., disposed between the power source module 500 and the plurality of dielectrics 420, to selectively apply the voltage from the power source module 500 to each of the plurality of dielectrics 420. When the first and second pixel areas PA1 and PA2 on the reflective electrode 410 are in contact with the first and second dielectrics 421 and 422, the effective refractive index of the first and second pixel areas PA1 and PA2 changes according to the distance between the first and second dielectrics 421 and 422 and reflective electrode 410, respectively. Accordingly, the reflectivity of the first and second pixel areas PA1 and PA2 on the reflective electrode 410 is different before and after coming into contact with the first and second dielectrics 421 and 422.

In the manner described above, the first dielectric 421 regulates the effective refractive index corresponding to the first pixel area PA1 of the reflective electrode 410, and the second dielectric 422 regulates the effective refractive index corresponding to the second pixel area PA2 of the reflective electrode 410.

Each of the plurality of dielectrics 420 corresponds to a respective pixel area, and the power source module 500 regulates the voltage separately for each of the plurality of dielectrics 420. Consequently, the reflectivity of the reflective electrode 410 is regulated for each pixel area separately.

For example, if voltage is applied to the second dielectric 422, but not to the first dielectric 421, the second dielectric 422 is in contact with the reflective electrode 410 and the first dielectric 421 is not in contact with the reflective electrode 410, as shown in FIG. 3. In contrast, if the power source module 500 applies voltage to the first dielectric 421 and cuts off the voltage to the second dielectric 422, the first dielectric 421 comes into contact with the reflective electrode 410, and the second dielectric 422 is again separated from the reflective electrode 410. Because the edges of each of the plurality of dielectrics 420 are connected to the isolation part 430, each of the plurality of dielectrics 420 can return to the state it was in before contacting the reflective electrode 410.

In the manner described above, the reflectivity of the first pixel area PA1 and the reflectivity of the second pixel area PA2 of the reflective electrode 410 are regulated separately by the first and second dielectrics 421 and 422, respectively.

In this manner, the pixel section 400 regulates the reflectivity of the reflective electrode 410 for each pixel area separately using the plurality of dielectrics 420, and by doing so regulates the surface plasmon resonance that arises in the interface of the reflective electrode 410 and the plurality of dielectrics 420 separately for each pixel area.

The surface plasmon resonance is collective charge density oscillation of the electrons which arises on the surface of the metal film. To be precise, a surface plasmon wave can arise along the interface between the metal film and the adjacent dielectric substance. The surface plasmon wave can be excited by photons or electrons, and this excitation of the surface plasmon wave is referred to as surface plasmon resonance. The surface plasmon wave oscillates parallel to the incident surface and has a P-wave component, in contrast to electromagnetic waves in free space.

The incident angle generated by the surface plasmon resonance differs according to the thickness and refractive index of the dielectric substance.

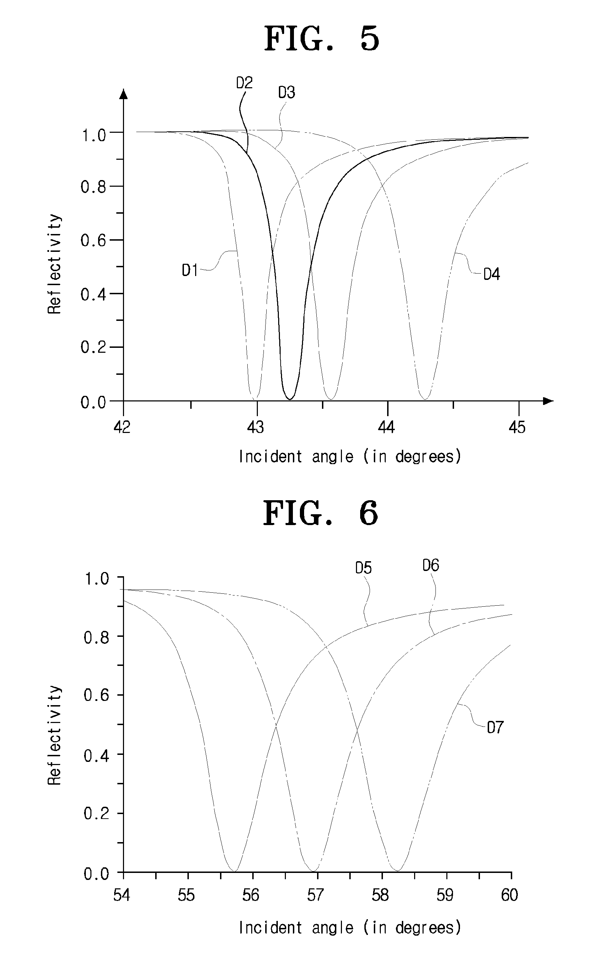

The difference in the incident angle generated by the surface plasmon resonance according to the thickness and dielectric constant of the metal film is explained in detail below, referring to FIGS. 5 and 6.

FIG. 5 is a graph illustrating the reflectivity of the light entering the prism according to the thickness of the metal film.

In FIG. 5, incident angles at which surface plasmon resonance arises on the first to fourth metal films D1, D2, D3, D4 which are formed with varying thicknesses, that is, incident angles at which a reflection never arises, and which have a reflectivity of roughly 0%, are shown to be distinct.

The thickness of the first to fourth metal films D1, D2, D3, D4 increases in numerical order from the first metal film D1 to the fourth metal film D4. As the thickness of the metal film increases, the incident angle produced by the surface plasmon resonance also increases as a result.

FIG. 6 is a graph illustrating the reflectivity of the light beam entering the prism corresponding to the refractive index of the dielectric substance.

In FIG. 6, the incident angles produced by the surface plasmon resonance from the fifth to seventh dielectric substances D5, D6 and D7, each of which has a different degree of refractive index, can be seen to be distinct.

To be precise, as the refractive index of the fifth to seventh dielectric substances D5, D6 and D7 increases in numerical order, the incident angle produced by the surface plasmon resonance also increases in the same order from the fifth dielectric substance D5 to the seventh dielectric substance D7.

As described above, the incident angle of the surface plasmon resonance differs according to the thickness of the metal film or the refractive index of the dielectric substance, that is, the dielectric constant.

Referring again to FIGS. 3 and 4, the thickness of the reflective electrode 410 for each pixel area corresponding to the image signal must vary, or the refractive index of each of the plurality of dielectrics 420 must change, in order to guide the surface plasmon resonance for a specific incident angle according to the image signal. That is, in order to regulate the surface plasmon resonance for each pixel area of the reflective electrode 410 corresponding to the image signal, either the thickness of the reflective electrode 410 must be regulated, or the refractive index of each of the plurality of dielectrics 420 must be regulated.

In reality, however, it is difficult to modify the thickness of the reflective electrode 410 for each pixel area correspond with the image signal. In contrast, the refractive index of each of the plurality of dielectrics can be regulated using the voltage from the power source module 500 provided separately for each of the plurality of dielectrics 420.

The power source module 500 according to the present invention regulates the voltage provided to the plurality of dielectrics 420 for each pixel area separately, in order to regulate the refractive index of each of the plurality of dielectrics 420 for each pixel area separately corresponding to the image signal.

To be precise, the power source module 500 provides voltage to the reflective electrode 410 and the plurality of dielectrics 420 according to the image signal, and for each pixel area the plurality of dielectrics 420 are in contact with the reflective electrode 410 or separated from the reflective electrode 410 according to the voltage provided from the power source module 500.

If the surface plasmon resonance arises on the interface of the reflective electrode 410 and a specific dielectric, because the light L2 emitted by the polarizer 200 moves according to the interface between the reflective electrode 410 and the dielectric, the reflected light L3 from the pixel area on the relevant dielectric is not emitted.

Consequently, pixel areas in which the surface plasmon resonance is generated are black, and pixel areas in which the surface plasmon resonance is not generated are white. Additionally, because the surface plasmon resonance never reflects light, the pixel section 400 is able to prevent color leaks arising in the black state. As a result of this, the image display apparatus 1000 can improve the contrast ratio, and thereby improve display characteristics.

The light supplier 100, in FIG. 1, regulates the incident angle according to whether the surface plasmon resonance of the pixel section 400 arises if the reflective electrode 410 and the dielectric are in contact, or the surface plasmon resonance of the pixel section 400 arises if the reflective electrode 410 and the dielectric are separated.

Moreover, because the wavelength of the light beam differs according to the color of the light, the incident angle at which the surface plasmon resonance arises also differs according to the color of the light. Therefore, the incident angle of the light L1 emitted by the first to third light sources 110, 120 and 130, in FIG. 1, differs according to the light source, and the location of the first to third light sources 110, 120 and 130 also differs.

As described above, the pixel section 400 according to the present invention regulates the surface plasmon resonance by regulating the effective refractive index of the dielectric separately for each pixel area, and the image display apparatus 1000 is able to improve display characteristics through improving the contrast ratio by completely cutting off the light in the black state.

Also, the manufacturing process of the pixel section 400 is relatively simple compared to a DMD chip, so productivity can be increased and manufacturing costs can be reduced.

The lens 600, illustrated in FIG. 1, faces the exit surface 330 of the prism 300. The lens 600 receives the light beam L4 regulated by the prism 300 and the pixel area 400. The lens 600 diffuses and emits the light beam L4 from the exit surface 330 of the prism 300. Although it is not illustrated in the drawings, the light L5 emitted by the lens 600 is projected onto a screen (not shown), and by this means, the image corresponding to the image signal is displayed on the screen.

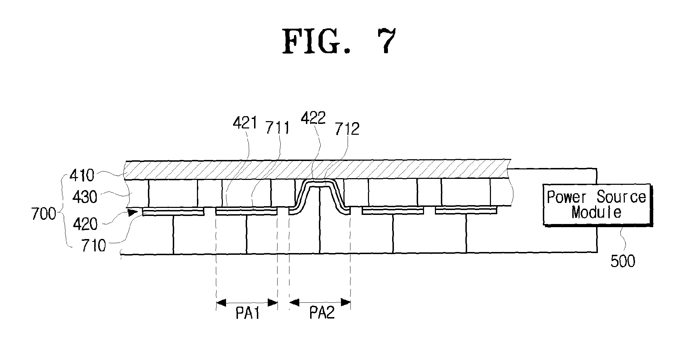

FIG. 7 is a sectional view illustrating a different exemplary embodiment of the pixel area shown in FIG. 1.

The pixel area 700 in FIG. 7 has a structure that is substantially the same as that of the pixel area 400 in FIG. 3, except for the electrooptical member 710. Therefore, in explaining FIG. 7, detailed explanation of structural components which have corresponding components with the same function in the pixel area 400 in FIG. 3 is omitted.

The pixel area 700 comprises a reflective electrode 410, a plurality of dielectrics 420, an isolation part 430, and a plurality of electrooptical members 710 facing the plurality of dielectrics 420.

The plurality of electrooptical members 710 is disposed on the bottom of the plurality of dielectrics 420, and each pixel area is separated from the other pixel areas. The plurality of electrooptical members 710 are composed of a thin film which has the electrooptical property that the refractive index changes according to the voltage applied.

Each electrooptical member is connected electrically to the power source module 500, and the refractive index changes according to the voltage from the power source module 500. If the refractive index of an electrooptical member changes, the refractive index of the corresponding dielectric also changes, and as a result of this, the effective refractive index of the reflective electrode 410 changes in the pixel area corresponding to the relevant dielectric. Therefore, the effective refractive index of each pixel area of the reflective electrode 410 is regulated according to the voltage applied to each electrooptical member.

For example, the first electrooptical member 711 disposed on the first dielectric 421 regulates the refractive index of the first dielectric 421, and the second electrooptical member 712 disposed on the second dielectric 422 regulates the second dielectric 422.

The plurality of electrooptical members 710 are able to more precisely regulate the effective refractive index of the plurality of dielectrics 420, that is, the dielectric constant, using the power source provided from the power source module 500. For example, if voltage corresponding to the gradation value of the second pixel area on the second electrooptical member 712 is applied by the power source module 500, the second dielectric 422 contacts the reflective electrode 410. The refractive index of the second electrooptical member 712 is regulated according to the voltage from the power source module 500, and accordingly, the effective refractive index of the second dielectric 422 is regulated according to the refractive index of the second electrooptical member 712. The effective refractive index of the reflective electrode 410 is regulated according to the refractive index of the second dielectric 422 in the second pixel area PA2 corresponding to the second dielectric 422, and accordingly, the reflectivity corresponding to the second pixel area PA2 of the reflective electrode 410 is regulated according to the gradation value of the second pixel area PA2. Due to this, the reflective electrode 410 is able to reflect the light corresponding to the gradation value of the second pixel area PA2 in the second pixel area PA2.

In this manner, each electrooptical member can regulate more precisely the reflectivity of each pixel area of the reflective electrode 410 by varying the refractive index of the relevant dielectric if the reflective electrode 410 and the dielectric are in contact. Therefore, the pixel area 700 can express more precisely the gradation value of each pixel area corresponding to the image signal using the plurality of electrooptical members 710, and accordingly, the image display apparatus 1000 can express precisely the various degrees of gradation so the display characteristics can be improved.

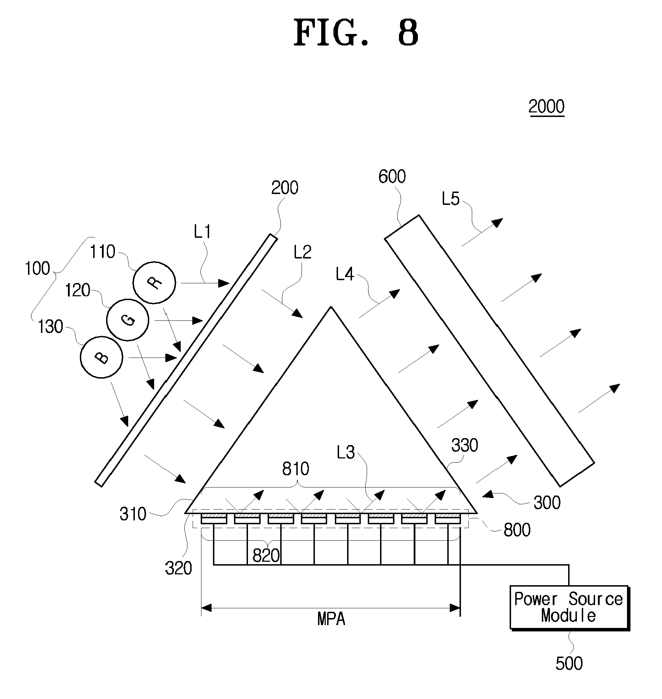

FIG. 8 is a plane view showing the image display apparatus according to a different exemplary embodiment of the present invention.

The image display apparatus 2000 in FIG. 8 has a structure that is substantially the same as the structure of the image display apparatus 1000 shown in FIG. 1, except for the pixel area 800. Therefore, in explaining FIG. 8, detailed description of components that are identical to components of the image display apparatus 1000 in FIG. 1 is omitted.

The image display apparatus 2000 according to the present invention comprises a light supplier 100, a polarizer 200, a prism 300, a pixel section 800, a power source module 500 and a lens 600.

The light supplier 100 receives power from an external source and emits a beam of light L1. The light supplier 100 comprises a first light source 110 which emits a red beam of light, a second light source 120 which emits a green beam of light, and a third light source 130 which emits a blue beam of light. The incident angles at which the red, green and blue light beams enter the prism differ.

The polarizer 200 polarizes the light beam L1 emitted by the light supplier 100, and the polarized light L2 enters the prism 300.

The prism 300 provides the light L2 received from the polarizer 200 to the pixel area 800, and emits light L3 which has been regulated by the pixel area 800.

The pixel area 800 is disposed on the reflective surface of the prism 300.

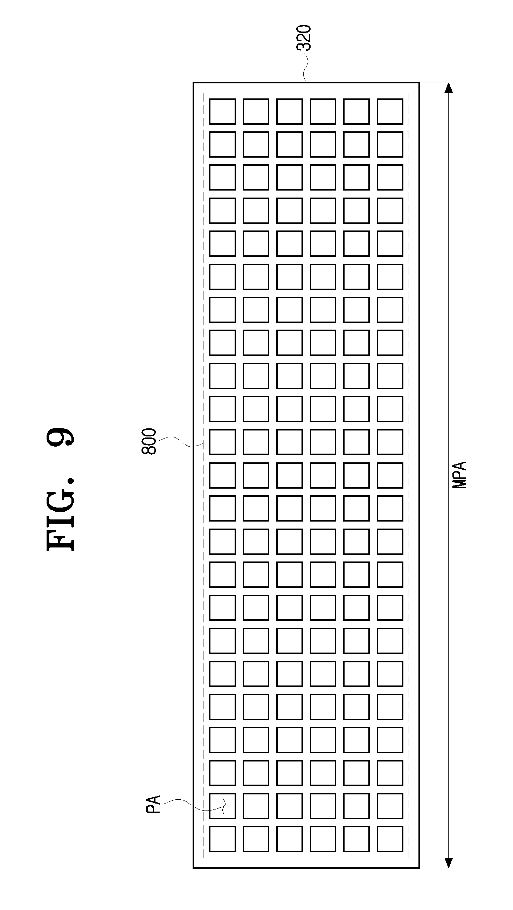

FIG. 9 is a plane view illustrating the rear of the pixel area shown in FIG. 8.

The pixel area 800 in FIGS. 8 and 9 comprises a reflective array 810 which reflects light received from the incident surface of the prism, and one or more electrooptical members 820 disposed on one surface of the reflective array 810.

The reflective array 810 is disposed on the reflective surface of the prism 300, and is composed of metal film. The reflective array 810 comprises a plurality of reflective electrodes formed at predetermined intervals. One reflective electrode defines one pixel area PA, and the reflective array 810 thereby defines the plurality of pixel areas MPA.

The electrooptical members 820 are formed facing the plurality of reflective electrodes, and each pixel area is separate from the other pixel areas. The electrooptical members 820 are connected electrically to the power source module 500, and the power source module 500 regulates the voltage provided to the electrooptical members corresponding to the image signal for each pixel area.

The electrooptical member 820 receives voltage of a value set separately for each pixel area corresponding to the image signal from the power source module 500. The refractive index of the electrooptical member 820 is regulated separately for each pixel area corresponding to the voltage, and the reflectivity of the reflective array 810 is regulated corresponding to the refractive index of the electrooptical members 820. To be precise, the reflectivity for each pixel area of the reflective array 810 is regulated according to the refractive index corresponding to each pixel area of the electrooptical members 820.

In this manner, the pixel area 800 is able to regulate the surface plasmon resonance of each reflective electrode and the gradation value of each pixel area using the voltage applied to the electrooptical members 820. Accordingly, the image display apparatus is able to implement full color, and the black state can be implemented using the surface plasmon resonance, so color leaks can be prevented from arising in the black state. The image display apparatus 2000 can thereby improve the contrast ratio, and so can improve the display characteristics.

Also, the image display apparatus 2000 can display the image using the pixel section 800, which has a simpler manufacturing process than a DMD chip, and so productivity can be increased and manufacturing costs reduced.

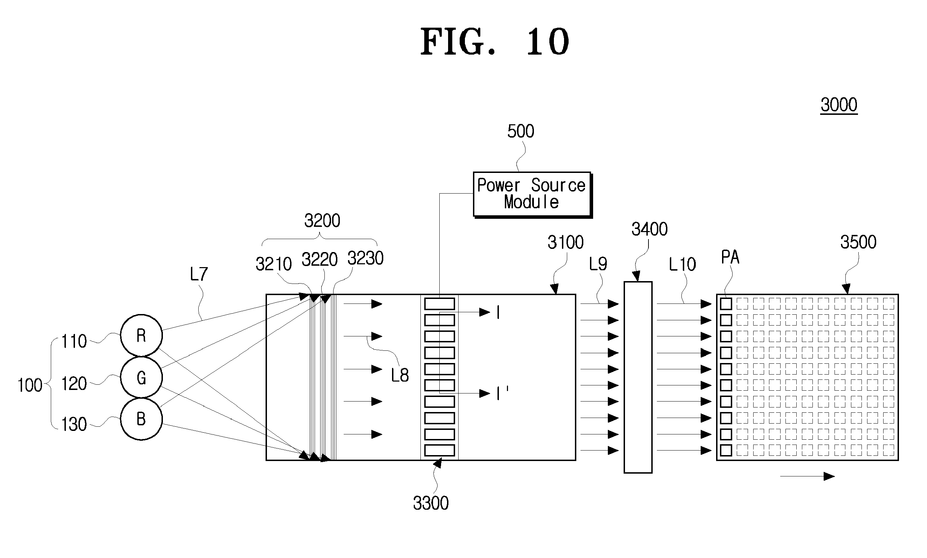

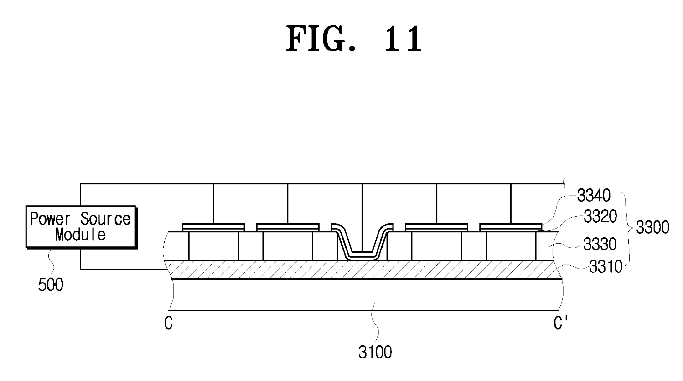

FIG. 10 is a plane view showing the image display apparatus according to a different exemplary embodiment of the present invention, and FIG. 11 is a sectional view following the cutting line I-I' in FIG. 10.

The image display apparatus according to the present invention 3000 illustrated in FIG. 10 comprises a light supplier 100, a power source module 500, an optical waveguide panel 3100, a diffraction grid 3200, a light controller 3300, a scanner 3400, and a screen 3500.

The light supplier 100 receives power from an external source and emits a beam of light L7, and provides the generated light L7 to the optical waveguide panel 3100. The light supplier 100 comprises first to third light sources 110, 120 and 130, and each light source emits a different color light. The first light source 110 emits red light, the second light source 120 emits green light, and the third light source 130 emits blue light.

The optical waveguide panel 3100 guides the light beam L8 received from the light supplier 100 through the diffraction grid 3200, and emits the light beam L9 regulated by the light controller 3300.

The diffraction grid 3200 is disposed on the optical waveguide panel 3100, and polarizes the light received from the light supplier 100 and provides the polarized light to the optical waveguide panel 3100. The diffraction grid 3200 comprises first to third diffraction sections 3210, 3220 and 3230, and the first to third diffraction sections 3210, 3220 and 3230 are disposed at predetermined intervals from each other. The first diffraction section 3210 polarizes light emitted by the first light source 110, the second diffraction section 3220 polarizes light emitted by the second light source 120, and the third diffraction section 3230 polarizes light emitted by the third light source 130.

The light controller 3300 is disposed on top of the optical waveguide panel 3100 and is connected electrically to the power source module 500, so the light controller 3300 controls the light inside the optical waveguide panel 3100. The light controller 3300 controls the light for each row of the plurality of pixel areas on the screen 3500. The plurality of pixel areas is formed as an array, and a single pixel area is the basic unit for displaying the image.

The light controller 3300 in FIG. 11 comprises a reflective electrode 3310 on the upper surface of the optical waveguide panel 3100; a plurality of dielectrics 3320 facing the reflective electrode 3310; and an isolation part 3330, interposed between the reflective electrode 3310 and the plurality of dielectrics 3320.

The reflective electrode 3310 is formed of metal film and is disposed on the optical waveguide panel 3100, and switches the light L8 on the inside of the optical waveguide panel 3100 on and off.

The plurality of dielectrics 3320 are disposed at a predetermined distance from the reflective electrode 3310. The plurality of dielectrics 3320 are formed facing the rows of the plurality of pixel areas, and the light controller 3300 controls each pixel area formed on the relevant row, line by line. To be precise, the light L9 emitted from the optical waveguide panel 3100 is provided to the pixel areas located on a single line of the plurality of pixel areas, and a beam of light corresponding to a one-dimensional image is emitted.

The edges of each dielectric are connected to the isolation part 3330. The plurality of dielectrics 3320 are separated from each other, and regulate the effective refractive index of the reflective electrode 3310 corresponding to each line.

The reflective electrode 3310 and the plurality of dielectrics 3320 are connected electrically to the power source module 500, and receive voltage from the power source module 500. In particular, the power source module 500 regulates the voltage separately for each dielectric corresponding to the image signal. The power source module 500 switches the voltage provided to the plurality of dielectrics 3320 on or off corresponding to the image signal received from outside. To be precise, the power source module 500 is connected individually to each dielectric, and switches the voltage supply on or off for each dielectric separately.

If a dielectric receives voltage when the reflective electrode 3310 receives voltage, the relevant dielectric comes into contact with the reflective electrode 3310. Because the effective refractive index of the area of the reflective electrode 3310 in contact with the dielectric changes, the reflectivity of the area in contact with the dielectric is different before and after coming into contact with the dielectric, and the surface plasmon resonance of the reflective electrode 3310 can thereby be regulated.

For example, if the light controller 3300 is in contact with the reflective electrode 3310 and the dielectrics, the surface plasmon resonance can be generated, and likewise if the reflective electrode 3310 and the dielectrics are separated, the surface plasmon resonance can also be generated.

If the surface plasmon resonance is generated between the reflective electrode 3310 and a specific dielectric, the light L8 inside the optical waveguide panel 3100 is cut off in the area corresponding to the relevant dielectric. Accordingly, light cannot be provided to the pixel area of the screen 3500 corresponding to the area in which the surface plasmon resonance arises, so the relevant pixel area becomes black. In contrast, as light can be provided to pixel areas corresponding to areas in which the surface plasmon resonance does not arise, pixel areas which receive light become white.

In this manner, the image display apparatus 3000 is able to implement the black state using the surface plasmon resonance, so the phenomenon of light leaks arising in the black state can be prevented. Accordingly, the contrast ratio of the image display apparatus 3000 can be improved, and the display characteristics can also be improved.

The isolation part 3330 separates the reflective electrode 3310 and the dielectrics 3320 at a predetermined distance. If the voltage supply is cut off even when the reflective electrode 3310 and the plurality of dielectrics 3320 are in contact due to the voltage provided from the power source module 500, the isolation part 3330 restores the plurality of dielectrics to their original state.

The light controller 3300 further comprises a plurality of electrooptical members 3340 which coat one surface of the plurality of dielectrics 3320.

The plurality of electrooptical members 3340 are connected electrically to the power source module 500 and regulate the effective refractive index of the plurality of dielectrics 3320. The plurality of electrooptical members 3340 face the plurality of dielectrics 3320, and are disposed separately for each dielectric. The power source module 500 regulates the voltage provided to each electrooptical member corresponding to each dielectric. The plurality of electrooptical members 3340 precisely regulates the refractive index of each dielectric according to the voltage from the power source module 500.

The power source module 500 regulates the voltage applied to the plurality of electrooptical members according to the gradation value of each pixel area, and accordingly the plurality of electrooptical members 3340 regulates the refractive index of each dielectric according to the gradation value of each pixel area. If the refractive index of the dielectrics is regulated, the effective refractive index of the reflective electrode 3310 varies according to the effective refractive index of the relevant dielectric for the area corresponding to each dielectric. As the reflectivity of the reflective electrode 3310 corresponding to the gradation value of each pixel area is regulated, the reflective electrode 3310 regulates and emits a beam of light inside the optical waveguide panel 3100 separately for each pixel area. Accordingly, the optical waveguide panel 3100 is able to emit light L9 according to the gradation value of each pixel area, and by this means the image display apparatus is able to implement a range of gradations of the image.

As described above, the light controller 3300 regulates the reflectivity of the reflective electrode 3310 using the plurality of dielectrics 3320 and the plurality of electrooptical members 3340 for each pixel area separately. Accordingly, since the image display apparatus 3000 is able to display the image using a light controller 3300 with a relatively simple production process, productivity can be increased, and production costs can be reduced.

Below, the process of projecting the light beam L9 regulated by the light controller 3300 onto the screen is explained, making reference to the attached drawings.

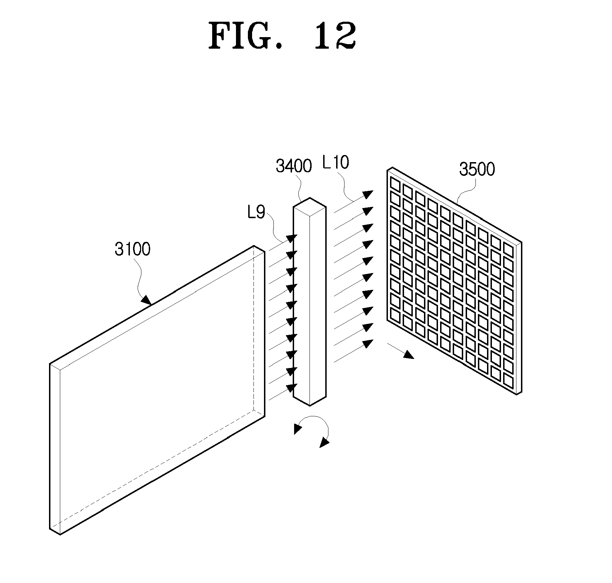

FIG. 12 is a perspective view illustrating the image display apparatus shown in FIG. 10. In order to show more clearly the light input / output relationship between the optical waveguide panel 3100, scanner 3400, and screen 3500, the light supplier 100, power source module 500, diffraction grid 3200 and light controller 3300 are omitted in FIG. 12.

The optical waveguide panel 3100 in FIGS. 10 and 12 emits light L9 regulated by the light controller 3300 from the surface in contact with the scanner 3400. The light emitted simultaneously from the optical waveguide panel 3100 displays a one-dimensional image, that is, an image displayed on a single line among the plurality of pixel areas. To be precise, the light L9 emitted from the optical waveguide panel 3100 is provided to the pixel area line by line, and the emitted light L9 is light in which the gradation value is regulated by the light controller 3300 separately for each pixel area corresponding to the relevant line.

The scanner 3400 concentrates the light L9 emitted from one side of the optical waveguide panel 3100, and then diffuses and emits the light L9. To be precise, the rows of the plurality of pixel areas emit light L10 while revolving in a set direction, and scan the light emitted by the optical waveguide panel 3100 row by row.

For example, if light corresponding to the first row R1 among the plurality of pixel areas is emitted from the optical waveguide panel 3100, the scanner 3400 scans the light emitted by the optical waveguide panel 3100 in row 1. The light controller 3300 regulates the light of the optical waveguide panel 3100 corresponding to each pixel area located in row 1. By this means, the light provided to row 1 from the optical waveguide panel 3100 has a gradation value corresponding to each pixel area of row 1. After this, the optical waveguide panel 3100 emits the light corresponding to row 2 positioned after row 1, and the scanner 3400 rotates and scans the light emitted from the optical wavelength panel 3100 to row 2.

In this manner, the optical waveguide panel 3100 emits light line by line, and the scanner receives the light from the optical waveguide panel and scans each line. By this process, the image display apparatus 3000 displays the image corresponding to the image signal on the screen.

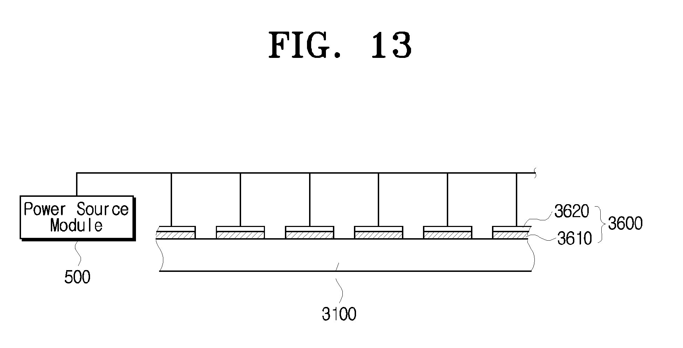

FIG. 13 is a sectional drawing showing a different exemplary embodiment of the light controller shown in FIG. 11.

The light controller 3600 in FIG. 13 comprises a plurality of reflective electrodes 3610 and a plurality of electrooptical members 3620.

The plurality of reflective electrodes 3610 are provided on the upper surface of the optical waveguide panel 3100, and are formed of metal film. The plurality of reflective electrodes 3610 are formed facing the plurality of lines comprised in the plurality of pixel areas, and are disposed at a predetermined distance. In the present exemplary embodiment, the number of reflective electrodes 3610 is the same as the number of rows in the pixel areas, and the plurality of reflective electrodes 3610 are arranged in the same direction as the lines of the plurality of pixel areas are arranged.

The plurality of electrooptical members 3620 is formed facing the plurality of reflective electrodes 3610, and are disposed on the upper surface of the plurality of reflective electrodes 3610. The plurality of electrooptical members 3620 are separated from each other, and vary the effective refractive index of the corresponding reflective electrodes 3610. To be precise, the plurality of electrooptical members 3620 are electrically connected to the power source module 500, and the power source module 500 applies voltage corresponding to the image signal to the plurality of electrooptical members 3620. The power source module 500 applies voltage separately for each of the electrooptical members 3620.

The refractive index of the plurality of electrooptical members 3620 varies according to the voltage applied. and accordingly, the reflectivity of the plurality of reflective electrodes 3610 is regulated by the effective refractive index varying according to the refractive index of the plurality of electrooptical members 3620. The power source module 500 regulates and applies voltage separately for each of the electrooptical members 3620, so the reflectivity of the plurality of reflective electrodes 3610 is regulated separately for each of the reflective electrodes 3610.

The reflectivity of the plurality of reflective electrodes 3610 is regulated by the refractive index of the plurality of electrooptical members 3620, so the light controller 3600 regulates the voltage applied to each electrooptical member 3600, and is able to regulate whether or not the surface plasmon resonance arises on the surface of the reflective electrodes 3610 separately for each of the reflective electrodes 3610.

Because the reflective electrodes 3610 on which the surface plasmon resonance arises excite the surface plasmon resonance and never reflect light, the light beam from the optical waveguide panel 3100 is cut off from the relevant reflective electrodes 3610 and the corresponding pixel area. Therefore, pixel areas corresponding to reflective electrodes 3610 in which surface plasmon resonance arises are black, and pixel areas into which light enters are white.

In this manner, the light controller 3600 induces the surface plasmon resonance by regulating the effective refractive index of the plurality of reflective electrodes 3610 using the plurality of electrooptical members 3620, and forms the black state using the surface plasmon resonance. Accordingly, the light controller 3600 is able to improve the contrast ratio, through being able to completely cut off the light in the black state.

The image display apparatus according to the present invention as described above regulates the reflectivity of the reflective electrodes corresponding to the image signal for each pixel area. Accordingly, the image display apparatus displays the image by regulating the surface plasmon resonance which arises on the surface of the reflective electrodes and the reflectivity of the reflective electrodes for each pixel area. In particular, the image display apparatus is able to implement the black state using the surface plasmon resonance, and the image display apparatus is thereby able to prevent color leaks from arising in the black state. Therefore, the image display apparatus is able to improve the contrast ratio, and thereby is able to improve the display characteristics.

Moreover, the manufacturing process of the image display apparatus is simpler than for a DMD chip, so productivity can be increased and production costs can be reduced.

The present invention is explained above referring to a specific exemplary embodiment, but those skilled in the art of the technical field to which the present invention belongs will readily understand that various modifications and amendments can be made within the scope of the present invention without departing from the scope of the present invention.

## Claims

1. An image display apparatus comprising:
a light supplier which emits light;
a prism which receives the light emitted by the light supplier and bends a path of the light;
a pixel section which comprises a reflective electrode disposed on one surface of the prism to reflect a beam of light received from the prism, and an electrooptical member varying in effective refractive index according to a voltage applied to regulate a light reflectivity of the reflective electrode; and
a power source module which is electrically connected to the dielectrics, and which regulates the voltage applied to the at least one dielectric to regulate the effective refractive index of the at least one dielectric according to an image signal.

2. An image display apparatus as claimed in claim 1, wherein the electrooptical member comprises at least one dielectric disposed at a predetermined distance from the reflective electrode.

3. An image display apparatus as in claim 2, wherein
the reflective electrode is divided into a plurality of pixel areas,
the at least one dielectric comprises a plurality of dielectrics, and
the plurality of dielectrics are isolated from each of the plurality of the pixel areas to regulate a reflectivity of the reflective electrode separately for each of the plurality of the pixel areas.

4. An image display apparatus as in claim 3, wherein the pixel section further comprises a isolation part which defines the plurality of pixel areas of the reflective electrode and which is disposed at a predetermined distance from the reflective electrode.

5. An image display apparatus as in claim 2, 3 or 4, wherein edges of the or each dielectric are disposed on the isolation part.

6. An image display apparatus as in claim 2, wherein the at least one dielectric is in contact with the reflective electrode if the voltage is applied, and the at least one dielectric is separated from the reflective electrode if the voltage is cut off.

7. An image display apparatus as in any one of claims 2 to 6, wherein the pixel section further comprises a voltage regulating member which regulates the dielectric constant of the at least one dielectric corresponding to the voltage from the power source module to regulate a reflectivity of a light received from the prism according to a gradation value corresponding to the image signal.

8. An image display apparatus as in claim 7, wherein the voltage regulating member comprises an electrooptical member in which the refractive index varies according to the voltage applied.

9. An image display apparatus as in claim 7 or 8, wherein the power source module is electrically connected to the voltage regulating member, and controls the voltage applied to the voltage regulating member.

10. An image display apparatus as in any preceding claim, wherein the light supplier emits a red beam of light, a green beam of light and a blue beam of light.

11. An image display apparatus as in claim 10, wherein angles at which the red, the green and the blue light beams enter the prism are each different.

12. An image display apparatus as in any preceding claim, wherein the prism comprises:
an incident surface which faces the light supplier, and through which the light emitted by the light supplier enters;
a reflective surface disposed on top of the reflective electrode, which provides light that has entered through the incident surface to the reflective electrode, and which receives light that has been reflected by the reflective electrode; and
an exit surface which emits light received from the reflective surface.

13. An image display apparatus as in claim 12, further comprising a polarizing member which is interposed between the incident surface and the light supplier, and polarizes the light emitted from the light supplier and provides the polarized light to the incident surface of the prism.

14. An image display apparatus as in claim 12 or 13, further comprising a lens which recombines the light emitted from the prism and emits a combined light.

15. An image display apparatus as in any preceding claim, wherein the reflective electrode is formed of metal film.

16. An image display apparatus as claimed in any preceding claim, wherein:
the prism emits a deflected beam;
the reflective electrode comprises a reflective array disposed as a matrix on one side of the prism; and
the electrooptic member is disposed on one side of the reflective array.

17. An image display apparatus as in claim 16, wherein the reflective array comprises a plurality of reflective electrodes disposed at predetermined intervals, and
the electrooptical members are disposed facing each reflective electrode.

18. An image display apparatus comprising:
a light supplier which emits light;
an optical waveguide panel which guides the light emitted by the light supplier;
a display which is divided into a plurality of pixel areas in a matrix and which displays an image using a light received from the optical waveguide panel;
a light controller which switches the light emitted by the light supplier inside the optical waveguide panel on or off for each line, so that the light emitted by the optical waveguide panel may be regulated separately for each line of the plurality of pixel areas; and
a scanner which receives light from the optical waveguide panel and scans the plurality of pixel areas on the display row by row.

19. An image display apparatus as in claim 18, wherein the light controller comprises:
a reflective electrode disposed on one side of the optical waveguide panel, which reflects light inside the optical waveguide panel; and
at least one dielectric which is disposed at a predetermined distance from the reflective electrode, and is formed facing lines of the plurality of pixel areas; and effective refractive index of the at least one dielectric corresponds to a voltage applied from an external source to regulate the light provided to each of the plurality of pixel areas of each line by regulating light reflectivity of the reflective electrode.

20. An image display apparatus as in claim 19, wherein the light controller is disposed on one surface of the at least one dielectric, and wherein the light controller further comprises an electrooptical member which regulates a dielectric constant of the at least one dielectric according to the voltage applied from the external source to regulate the light reflectivity of the reflective electrode corresponding to a gradation value of pixels corresponding to the dielectric.

21. An image display apparatus as in claim 19 or 20, wherein the at least one dielectric comprises a plurality of dielectrics, and
the light reflectivity of the reflective electrode is regulated according to the areas corresponding to each of the plurality of dielectrics.

22. An image display apparatus as in claim 18, wherein the light controller comprises:
at least one reflective electrode which is disposed on one surface of the optical waveguide panel, and which reflects light inside the optical waveguide panel; and
an electrooptical member which is disposed on one side of the at least one reflective electrode facing the reflective electrodes, wherein the refractive index corresponding to the voltage applied varies to regulate a reflectivity of the at least one reflective electrode.

23. An image display apparatus as in claim 22, wherein the at least one reflective electrode comprises a plurality of reflective electrodes, and
each of the plurality of reflective electrodes corresponds to each row of the plurality of pixel areas.

24. An image display apparatus as in any one of claims 18 to 23, further comprising at least one diffraction grid which is disposed on one side of the optical waveguide panel, and which guides the light emitted from the light supplier and provide the light emitted from the light supplier to the optical waveguide panel.

25. An image display apparatus as in claim 24, wherein the at least one diffraction grid comprises a plurality of diffraction grids and the plurality of diffraction grids corresponds to a color of light beams emitted by the light supplier, and
the plurality of diffraction grids are disposed at predetermined intervals.

26. An image display apparatus as in any one of claims 18 to 25, wherein the light supplier emits a red beam of light, a green beam of light and a blue beam of light.
